(19) Europäisches Patentamt

European Patent Office

Office européen des brevets

(11) **EP 0 965 777 B1**

(12) **FASCICULE DE BREVET EUROPEEN**

(45) Date de publication et mention
de la délivrance du brevet:
**23.04.2003 Bulletin 2003/17**

(51) Int Cl.7: **F16H 61/02**

(21) Numéro de dépôt: **99401426.4**

(22) Date de dépôt: **11.06.1999**

(54) **Procédé et dispositif d'adaptation automatique des boîtes de vitesses en situation de virage**

Verfahren und Vorrichtung zur Anpassung der Steuerung eines Getriebes während einer Kurvenfahrt

Process and device for automatically adapting gearbox control during cornering

(84) Etats contractants désignés:
**BE DE ES GB IT**

(30) Priorité: **15.06.1998 FR 9807526**

(43) Date de publication de la demande:
**22.12.1999 Bulletin 1999/51**

(73) Titulaire: **Renault s.a.s.**
**92100 Boulogne Billancourt (FR)**

(72) Inventeur: **Taffin, Christian**
**92380 Garches (FR)**

(56) Documents cités:
EP-A- 0 638 742        DE-A- 4 120 603
DE-A- 4 204 881        DE-A- 19 626 990
JP-T1- 8 152 062

• PATENT ABSTRACTS OF JAPAN vol. 096, no.
010, 31 octobre 1996 (1996-10-31) & JP 08 152062
A (UNISIA JECS CORP), 11 juin 1996
(1996-06-11)
• traduction de la demande JP 08 152062 A

**Description**

La présente invention concerne un procédé permettant de gérer convenablement le rapport des boîtes de vitesses automatiques en situation dite de virage, ainsi qu'un dispositif mettant en oeuvre ce procédé.

L'invention s'applique aussi bien aux transmissions automatiques comportant un train d'engrenage épicycloïdal et un convertisseur hydrocinétique de couple placés sous le contrôle d'un calculateur, qu'aux transmissions dites "automatisées" ou "robotisées" constituées d'une boîte de vitesses mécanique classique, associée à des moyens additionnels de passage automatique des rapports.

Dans les procédés connus de gestion des boîtes de vitesses automatiques, lorsqu'un conducteur, conduisant un véhicule équipé d'une transmission automatique, aborde un virage sur un certain rapport, par exemple le troisième rapport, il relâche généralement l'accélérateur, ce qui provoque alors le passage au rapport supérieur, le quatrième par exemple, du fait de la constitution des lois de passage classiques. Ceci produit alors une sensation désagréable d'embarquement du véhicule due à l'absence de frein moteur.

Par ailleurs, en situation de conduite en montagne ou avec un véhicule chargé, lorsqu'un conducteur aborde un virage sur un rapport qui est élevé (le quatrième rapport par exemple), il a tendance à ralentir à l'entrée du virage et de ce fait il se trouve généralement en sortie du virage sur ce même rapport (en 4ème) mais avec une vitesse plus faible. Il est alors obligé de provoquer le rétrogradage par enfoncement de l'accélérateur pour relancer convenablement le véhicule à la sortie du virage, ce qui est mal ressenti de la part du conducteur et des passagers.

Par la publication JP 08 152062, on connaît un procédé d'adaptation automatique d'une boite de vitesses automatique consistant à déterminer si le véhicule est en situation de virage à partir de son accélération transversale, de sa vitesse de déplacement, du régime moteur et d'un paramètre représentatif du couple moteur, et à bloquer le rapport engagé en situation de virage tout en autorisant les rétrogradages en situation de virage et de montée, en fonction des efforts résistants appliqués au véhicule et du régime moteur.

Toutefois cette publication prévoit d'interdire les passages descendants en situation de virage.

La présente invention vise à remédier à cet inconvénient en prévoyant d'interdire les passages montants en situation de virage et de montée, tout en autorisant les passages descendants.

Dans ce but, elle propose que si le véhicule est en situation de virage lorsque l'effort résistant appliqué au véhicule est inférieur à un seuil préétabli, le rapport normalement déterminé soit adopté quand il est inférieur ou égal au rapport réel engagé et lorsque l'effort résistant est supérieur ou égal au seuil avec un régime moteur inférieur à un seuil préétabli, le rétrogradage soit forcé.

Selon d'autres caractéristiques du procédé selon l'invention :

- lorsque le véhicule est soumis à des efforts résistants inférieurs à un certain seuil prédéterminé, on compare le rapport proposé (N1) pendant l'étape de détermination du rapport de la boîte de vitesse au rapport réel engagé, et on empêche tout passage à un rapport (N) supérieur au rapport réel engagé ;
- lorsque le véhicule est soumis à un effort résistant supérieur ou égal audit seuil prédéterminé, on empêche tout passage à un rapport supérieur tant que le régime moteur est supérieur à un seuil de régime moteur prédéterminé ;
- si le régime moteur devient inférieur audit seuil de régime moteur, on rétrograde d'un rapport ;
- pour déterminer si le véhicule est en situation de virage ou non, on utilise un seuil prédéterminé d'accélération transversale et un seuil prédéterminé de la dérivée de l'accélération transversale par rapport au temps, et le véhicule est réputé en virage lorsque l'accélération transversale est supérieure audit seuil prédéterminé d'accélération transversale, ou lorsque la dérivée de l'accélération est supérieure audit seuil prédéterminé de la dérivée de l'accélération transversale ;
- avantageusement, lesdits seuils de détection de virage dépendent d'un paramètre relatif au style de conduite du conducteur ;
- de préférence, les seuils d'effort résistant et de régime moteur dépendent du rapport engagé, et ledit seuil de régime moteur dépend du style de conduite du conducteur.

L'invention concerne également un dispositif d'adaptation automatique d'une transmission à la courbure de la route comportant :

des moyens qui rétrogradent si le véhicule est en situation de virage et l'effort résistant est supérieur ou égal au seuil d'efforts résistantes et le régime moteur est inférieur à un seuil de régime moteur, et des moyens qui adoptent le rapport normalement quand il est inférieur ou égal au rapport réel engage si le véhicule est en situation de virage et l'effort résistant est inférieur au seuil d'efforts résistantes ou le régime moteur est supérieur à un seuil de régime moteur.

L'invention concerne en outre un véhicule automobile comportant un dispositif d'adaptation automatique de sa transmission présentant les caractéristiques ci-dessus.

L'invention sera mieux comprise en se référant à la description suivante faite à titre d'exemple non limitatif en référence aux dessins annexés, dans lesquels :

- la figure 1 représente une vue schématique partielle de certains éléments d'un véhicule automobile mettant en oeuvre le procédé d'adaptation du rapport de la boîte de vitesse au profil sinueux de la route ;
- la figure 2 représente un organigramme de principe des différentes étapes du procédé d'adaptation à la courbure de la route ;
- la figure 3 illustre un graphe des valeurs d'accélération utilisées pour la détection du virage.

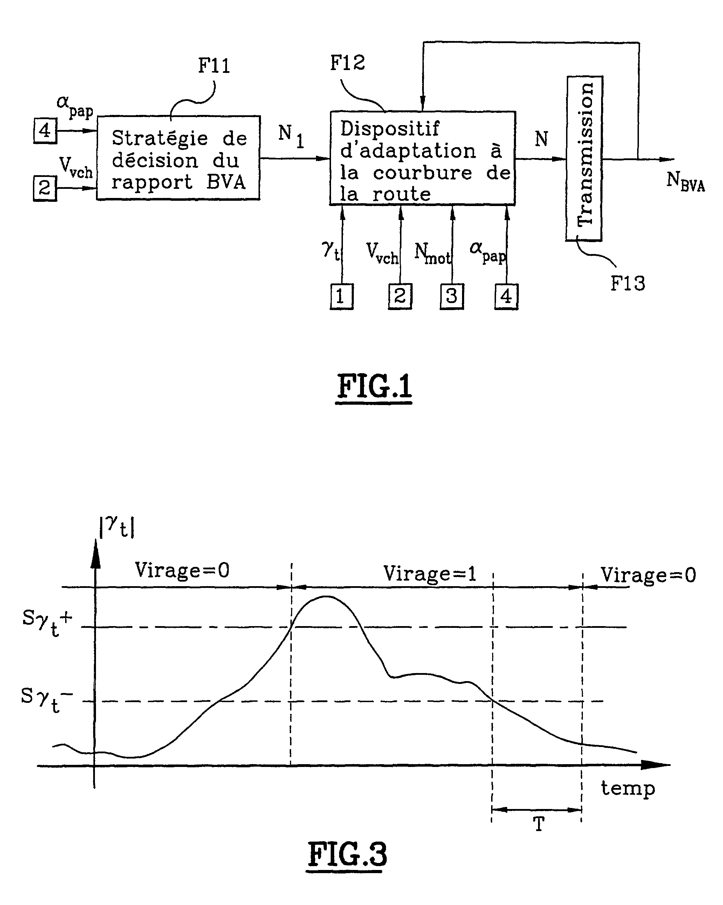

On se réfère à la figure 1. On a représenté dans cette figure l'intégration du dispositif d'adaptation à la courbure de la route dans l'environnement du véhicule et de la transmission. Ce dispositif comporte trois ensembles fonctionnels notés F11, F12 et F13.

Le bloc fonctionnel F11 représente un bloc de mise en oeuvre de la stratégie de décision du rapport courant de la boîte de vitesse. Ce bloc F11 reçoit en entrée les informations d'angle papillon $\alpha_{pap}$ et de vitesse du véhicule $V_{veh}$, et éventuellement d'autres informations (en fonction du type de stratégie de décision utilisée), ce bloc F11 délivrant alors, de façon connue en soi, une proposition de rapport notée N1.

Selon l'invention, le bloc fonctionnel F11 est suivi par un bloc fonctionnel F12 qui représente le dispositif d'adaptation du rapport de transmission à la courbure de la route. Le bloc fonctionnel F12 reçoit en entrée le rapport N1 issu du bloc F11 décrit plus haut, le rapport réellement engagé noté $N_{BVA}$, et les informations suivantes issues de capteurs 1, 2, 3, 4 associés au véhicule :

- l'information notée $\gamma_t$ issue du capteur 1, qui est l'accélération transversale (exprimée en m/s$^2$) du véhicule. Cette information peut également être calculée à partir d'un angle volant ou à partir des vitesses des roues arrière ;
- l'information notée $V_{veh}$, issue du capteur 2, qui est la vitesse du véhicule (exprimée en m/s) ;
- l'information notée $N_{mot}$, issue du compteur 3, qui est le régime moteur en tr/min ;
- l'information notée $\alpha_{pap}$ sur le schéma issue du capteur 4, qui est l'angle d'ouverture du papillon, exprimé en degrés, ou directement la valeur du couple moteur C. En effet, l'information couple moteur nécessaire à la mise en oeuvre de la stratégie proposée par l'invention peut être introduite, soit à partir de la valeur de l'angle papillon $\alpha_{pap}$ d'un moteur à essence, ou de la position de l'organe de commande d'injection d'un moteur Diesel, soit directement grâce à la valeur du couple calculée par le calculateur moteur et transmise par celui-ci aux autres calculateurs du véhicule, dont le calculateur de la transmission. En effet, lorsque l'information couple moteur est disponible, notamment sur les véhicules multiplexés, il n'est plus nécessaire de recalculer sa valeur à partir d'une cartographie fonction de l'angle papillon (ou de la position du levier d'injection), et du régime moteur.

En fonction de ses entrées, le bloc fonctionnel F12 décide (d'une manière qui sera décrite plus en détail dans la suite) du rapport N réel à appliquer en définitive à la transmission, qui est schématisée par le bloc fonctionnel F13.

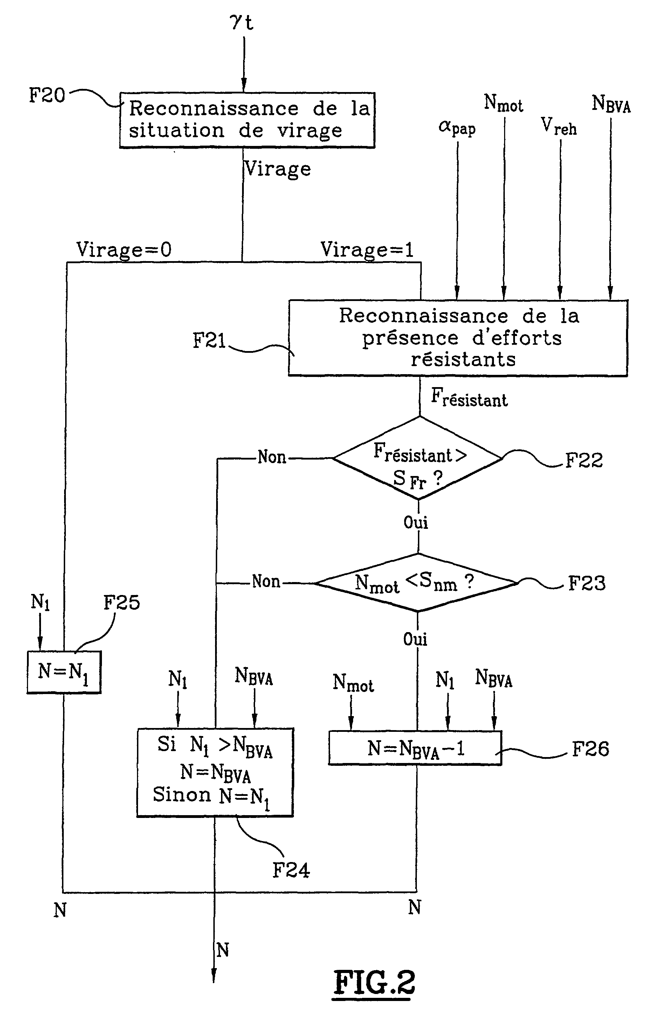

On se réfère maintenant à la figure 2. Cette figure détaille le contenu du bloc fonctionnel F12 de la figure 1, sous forme de schéma algorithmique, qui représente autant d'étapes du procédé d'adaptation mis en oeuvre par l'invention.

Le bloc fonctionnel F20 a pour fonction de reconnaître, à partir de l'information d'accélération transversale $\gamma_t$, si le véhicule est en situation de virage ou non. Ce bloc fonctionnel F20 délivre en sortie une information binaire notée "Virage" qui est telle que, si virage = 1, on estime que le véhicule se trouve dans un virage, et si « Virage » = 0, on estime que le véhicule n'est pas à cet instant engagé dans un virage. Selon l'invention, cette détection de virage en F20 est réalisée de la façon suivante, exprimée sous forme d'une condition mathématique :

$$\text{Si } ( |\gamma_t| > S\gamma_t^+ ) \text{ ou } (|d\gamma_t / dt > |Sd\gamma_t), \text{ alors Virage = 1.} \qquad (1)$$

Le fonctionnement de la détection du virage est illustré sur la figure 3, dans laquelle on a représenté une évolution classique de l'accélération transversale $\gamma_t$ et le principe de détection de virage en fonction de $\gamma_t$ . Par conséquent, comme représenté sur le graphe de la figure 3, le bloc F20 décide que le véhicule est en virage (Virage = 1) si le module de l'accélération transversale $|\gamma_t|$ est supérieur à un seuil prédéterminé $S\gamma_t^+$, ou bien encore si la dérivée de ce module par rapport au temps t est supérieure à un seuil prédéterminé $Sd\gamma_t$ (non représenté).

Lorsqu'on la condition (1) ci-dessus est réalisée, on impose Virage = 1 tant que le module $|\gamma_t|$ d'accélération transversale reste supérieur à un seuil prédéterminé inférieur $S\gamma_{t-}$ (tel que $S\gamma_t^- < S\gamma_{t+}$). Lorsque $|\gamma_t| < S\gamma_t^-$, on déclenche une temporisation de T secondes, pendant laquelle la grandeur Virage reste égale à 1, et au-delà de laquelle on imposera Virage = 0.

Cette temporisation permet de garder en mémoire que l'on vient de passer un virage et permet au conducteur de relancer convenablement son véhicule en sortie de virage.

Il est à noter que $Sd\gamma_t$, $S\gamma_t^+$, $S\gamma_t^-$ sont des seuils en accélération ajustés par le metteur au point.

Par ailleurs, il est à noter que la condition de mise en virage se déclenche sur l'activation du double test (1) : Si ($|\gamma_t| > S\gamma_t^+$) ou ($|d\gamma_t / dt| > Sd\gamma_t$). La condition sur la dérivée permet éventuellement d'anticiper l'activation de la stratégie virage dès l'entrée dans le virage et de ne pas attendre que l'on soit déjà "installé" dans le virage.

En outre, selon une variante de l'invention, les seuils de détection de mise en virage $Sd\gamma_t$, $S_{\gamma t}^+$ et $S_{\gamma t}^-$ peuvent dépendre d'une information relative au style de conduite du conducteur. En particulier, un conducteur sportif souhaitera une procédure de détection de virage plus active que le conducteur passif. Le style de conduite peut être déterminé par une procédure identique à celle décrite dans la publication EP-A1-0.777.071 au nom de la demanderesse.

Comme représenté dans l'organigramme de la figure 2, lorsqu'on se trouve en situation de ligne droite (virage = 0), le rapport appliqué à la boîte de vitesse automatique est égal au rapport N1 qui est issu du bloc fonctionnel F11. La fixation du rapport courant N = N1 est effectuée, en l'absence de virage, par le bloc fonctionnel F25. La fixation de N = N1 revient à dire que la stratégie d'adaptation de rapport n'a aucune action en l'absence de virage.

Selon l'invention, lorsque le véhicule se trouve en situation de virage (virage = 1), on détermine alors dans le bloc F21, le niveau d'effort résistant appliqué au véhicule, rapporté en m/s$^2$, et noté $F_{résistant}$. $F_{résistant}$ est calculé dans le bloc fonctionnel F21, par exemple à partir de la formulation suivante :

$$F_{résistant} = rap(N).C_{moteur} / Rayon.Masse - \tfrac{1}{2} \rho. Scx.V_{veh}^{2} /$$

$$Masse - g.k_r - dV_{veh}/dt,$$

expression dans laquelle:

- rap (N) est le rapport de démultiplication rapportée à la roue sur le rapport N,
- $C_{moteur}$ est le couple moteur introduit directement ou calculé en fonction par exemple de l'angle papillon et du régime moteur, $\alpha_{pap}$ et $N_{mot}$,
- Rayon est le rayon de la roue,
- Masse est la masse à vide du véhicule avec 2 personnes à bord,
- $\rho$ est la densité de l'air,
- Scx est le coefficient de pénétration dans l'air du véhicule,
- g est la pesanteur (g = 9,81 m/s$^2$),
- $k_r$ est le coefficient de résistance au roulement.

L'effort résistant $F_{résistant}$ représente en définitive la différence entre l'accélération nominale (que le véhicule aurait sur le plat, masse à vide, sans vent) et l'accélération réelle du véhicule. La sortie $F_{résistant}$ du bloc fonctionnel F21 est amenée à l'entrée d'un bloc de test F22. Dans ce bloc F22, on analyse le niveau d'effort résistant appliqué au véhicule, de la manière suivante:

- Si l'effort résistant $F_{résistant}$ est inférieur à un seuil prédéterminé $S_{Fr}$, il y a peu ou pas d'effort résistant, alors on active le bloc F24 dont la fonction est simplement d'empêcher tout changement de rapport qui conduirait à un rapport supérieur au rapport N1 prévu par le bloc F11. Ainsi, le bloc F24 tient compte de la proposition de rapport N1 issue du bloc F11 (figure 1) et du rapport réellement engagé $N_{BVA}$, et de la sortie du bloc F22. Et si le rapport N1 est supérieur au rapport engagé, on laisse le rapport N fixé au rapport engagé $N_{BVA}$. Par contre, si en l'absence d'effort résistant le rapport prévu N1 est inférieur ou égal au rapport engagé, on fixe le rapport courant au rapport N1 prévu par le bloc F11.
- Si l'effort résistant $F_{résistant}$ est supérieur ou égal à un seuil prédéterminé $S_{Fr}$, il y a alors des efforts résistants appliqués au véhicule, et dans ce cas on surveille le régime de rotation du moteur $N_{mot}$. A cet effet, l'information de présence d'effort résistant est transmise à un bloc de test F23, qui compare le régime moteur $N_{mot}$ à un seuil de régime moteur $S_{nm}$.

Si le régime moteur $N_{mot}$ est inférieur au seuil $S_{Nm}$ alors le moteur ne tourne plus suffisamment rapidement pour relancer convenablement la vitesse, et on active le bloc F26 dont la fonction est de forcer le rétrogradage en fixant le rapport courant N au rapport engagé diminué d'une unité: N = $N_{BVA}$ - 1. Ceci a pour effet de rétrograder et d'augmenter le régime moteur pour permettre de relancer le véhicule sans que le conducteur n'ait à intervenir.

Dans le cas contraire, si le régime moteur $N_{mot}$ est supérieur ou égal au seuil $S_{Nm}$, on active le bloc F24 décrit précédemment, ce qui a pour effet de ne pas permettre de changement de rapport.

Il est à noter que les seuils d'effort résistant $S_{Fr}$, et de régime moteur $S_{Nm}$ sont réglés par le metteur au point et peuvent éventuellement dépendre du rapport engagé. En variante, le seuil de régime moteur $S_{Nm}$ peut éventuellement dépendre du style de conduite du conducteur, le conducteur sportif désirant le rétrogradage dès que le régime moteur est en-dessous d'un seuil de régime moteur fixé à une valeur plus élevée.

Le procédé d'adaptation de boîte de vitesse selon l'invention permet en définitive de modifier les lois de passage de vitesses en tenant compte à la fois des situations de virage et des efforts résistants rencontrés par le véhicule en virage, ce qui permet d'éviter des montées de rapport inappropriées en virage, mais aussi des rétrogradages trop brutaux en sortie de virage.

**Revendications**

1. Procédé d'adaptation automatique d'une boîte de vitesses de véhicule en situation de virage, comportant des étapes consistant à:

   - à l'aide de capteurs placés sur le véhicule, déterminer l'accélération transversale ($\gamma_t$) du véhicule, le régime de rotation du moteur ($N_{mot}$), la vitesse ($V_{veh}$) du véhicule ainsi qu'un paramètre ($C, \alpha_p$) représentatif du couple moteur, et en fonction de l'accélération transversale, déterminer si le véhicule est en situation de virage; et

   si le véhicule n'est pas en situation de virage (Virage = 0), sélectionner le rapport (N1) normalement déterminé par la boîte de vitesse automatique;
   **caractérisé en ce que** si le véhicule est en situation de virage (Virage = 1), lorsque l'effort ($F_{résistant}$) appliqué au véhicule, est inférieur à un seuil SFr préétabli, le rapport N1 normalement déterminé est adopté quand il est inférieur ou égal au rapport réel engagé ($N_{BVA}$) et lorsque l'effort résistant. ($F_{résistant}$) est supérieur ou égal au seuil SFr avec un régime moteur ($N_{mot}$) inférieur à un seuil ($S_{nm}$) préétabli, le rétrogradage est forcé.,

2. Procédé selon la revendication 1 **caractérisé en ce que** pour déterminer si le véhicule est en situation de virage ou non, on utilise un seuil prédéterminé d'accélération transversale ($S_{\gamma t}^+$) et un seuil prédéterminé de la dérivée de l'accélération transversale par rapport au temps ($Sd\gamma_t$), et **en ce que** le véhicule est réputé en virage (Virage = 1) lorsque l'accélération transversale est supérieure audit seuil prédéterminé d'accélération transversale, ou lorsque la dérivée de l'accélération est supérieure audit seuil prédéterminé de la dérivée de l'accélération transversale.

3. Procédé selon la revendication 2, **caractérisé en ce que** lesdits seuils de détection de virage ($Sd\gamma t, S_{\gamma t}^+, S_{\gamma t}^-$) dépendent d'un paramètre relatif au style de conduite du conducteur.

4. Procédé selon la revendication 1, **caractérisé en ce que** les seuils ($S_{Fr}$) d'effort résistant et ($S_{nm}$) de régime moteur dépendent du rapport engagé ($N_{BVA}$).

5. Procédé selon la revendication 1 ou 4, **caractérisé en ce que** ledit seuil ($S_{Nm}$) de régime moteur dépend du style de conduite du conducteur.

6. Dispositif d'adaptation automatique d'une transmission à la courbure de la route comportant des moyens (F11) de sélection d'un rapport de boîte de vitesse en fonction de lois de passage pré-établies et délivrant en sortie une proposition de rapport (N1) lesdits moyens de sélection (F11) étant suivis par un dispositif (F12) d'adaptation du rapport à la courbure de la route comportant des moyens (F20) pour détecter si le véhicule est en situation de virage, qui décide d'un rapport (N) final à appliquer à la transmission (F13) en fonction du rapport proposé (N1), de la vitesse du véhicule ($V_{veh}$), du couple moteur (C) et de l'accélération transversale,
   des moyens de comparaison (F22) des d'efforts résistants appliqués au véhicule avec un seuil d'efforts résistants ($S_{Fr}$), des moyens de comparaison (F23) du régime moteur du véhicule ($N_{mot}$) avec un seuil de régime moteur ($S_{nm}$) et
   des, moyens qui sélectionnent le rapport normalement déterminé par la boîte de vitesse automatique (F25) si le véhicule n'est pas en situation de virage,
   **caractérisé en ce qu'**il comporte également
   des moyens qui rétrogradent (F26) si le véhicule est en situation de virage et l'effort résistant est supérieur ou égal au seuil d'efforts résistantes et le régime moteur est inférieur à un seuil de régime moteur, et
   des moyens qui adoptent le rapport normalement quand il est inférieur ou égal au rapport réel engage (F24) si le véhicule est en situation de virage et l'effort résistant est inférieur au seuil d'efforts résistantes ou le régime moteur est supérieur à un seuil dé régime moteur.

**7.** Véhicule automobile, **caractérisé en ce qu'**il comporte un dispositif d'adaptation automatique de transmission selon la revendications 6.

**Patentansprüche**

**1.** Verfahren zur automatischen Anpassung eines Fahrzeuggetriebes bei einer Kurvenfahrt, mit den folgenden Verfahrenschritten:

bestimmen mittels am Fahrzeug eingesetzter Fühler der Querbeschleunigung ($\gamma_t$) des Fahrzeuges, der Drehzahl ($N_{mot}$) des Motors, der Geschwindigkeit ($V_{veh}$) des Fahrzeuges und eines Parameters ($C, \alpha_p$) für das Motormoment und ermitteln als Funktion der Querbeschleunigung ob das Fahrzeug eine Kurve durchfährt und, wenn das Fahrzeug keine Kurve durchfährt (Kurve = 0), auswählen des Ganges N1, der normalerweise durch das Automatgetriebe festgelegt wird, **dadurch gekennzeichnet, dass**, wenn das Fahrzeug eine Kurve durchfährt (Kurve = 1) und wenn der auf das Fahrzeug einwirkende Fahrwiderstand $F_{resistant}$ kleiner als ein vorgegebener Schwellwert $S_{Fr}$ ist, der normalerweise bestimmte Gang N1 übernommen wird, wenn dieser kleiner oder gleich dem tatsächlich eingelegten Gang $N_{BVA}$ ist und dass wenn der Fahrwiderstand $F_{resistant}$ grösser oder gleich dem Schwellwert $S_{Fr}$ ist bei einer Motordrehzahl $N_{mot}$ kleiner als ein vorgegebener Schwellwert ($S_{nm}$) ein Herunterschalten durchgeführt wird.

**2.** Verfahren nach Anspruch 1, **dadurch gekennzeichnet, dass** zum bestimmen, ob das Fahrzeug eine Kurve durchfährt oder nicht ein vorgegebener Schwellwert ($S\gamma_t^+$)· der Querbeschleunigung und ein vorgegebener Schwellwert ($Sd\gamma_t$) der Ableitung der Querbeschleunigung nach der Zeit verwendet wird und dass angenommen wird, dass das Fahrzeug eine Kurve durchfährt (Kurve = 1), wenn die Querbeschleunigung grösser als der vorgegebene Schwellwert der Querbeschleunigung ist oder wenn die Ableitung der Querbeschleunigung gösser als der vorgegebene Schwellwert der Ableitung der Querbeschleunigung ist.

**3.** Verfahren nach Anspruch 2, **dadurch gekennzeichnet, dass** die Schwellwerte zum bestimmen einer Kurvenfahrt ($Sd\gamma_t$), $S\gamma_t^+$, $S\gamma_t^-$) von einem Parameter abhängen, der dem Fahrstil des Fahrers entspricht.

**4.** Verfahren nach Anspruch 1, **dadurch gekennzeichnet, dass** die Schwellwerte für den Fahrwiderstand ($S_{Fr}$) und für die Motordrehzahl ($S_{nm}$) vom eingelegten Gang ($N_{BVA}$) abhängen.

**5.** Verfahren nach Ansprüchen 1 oder 4, **dadurch gekennzeichnet, dass** der Schwellwert ($S_{nm}$) der Motordrehzahl vom Fahrstil des Fahrers abhängt.

**6.** Vorrichtung zur automatischen Anpassung eines Getriebes an eine Strassenkrümmung, mit einer Anordnung (F11) zur Auswahl eines Ganges für das Getriebe als Funktion von vorgegebenen Schaltvorschriften, an deren Ausgang der vorgeschlagene Gang (N1) ansteht und der eine Vorrichtung (F12) nachgeschaltet ist zur Anpassung des Ganges an die Strassenkrümmung , die eine Anordnung (F20) aufweist zum bestimmen, ob das Fahrzeug eine Kurve durchfährt, die einen endgültigen dem Getriebe F13 zu übermittelnden Gang (N) festlegt als Funktion des vorgeschlagenen Ganges (N1), der Fahrzeuggeschwindigkeit ($V_{veh}$), des Motormomentes (C) und der Querbeschleunigung, mit einer Anordnung (F22) zum vergleichen des auf das Fahrzeug einwirkenden Fahrwiderstandes mit einem Schwellwert des Fahrwiderstandes ($S_{Fr}$), mit einer Anordnung (F23) zum vergleichen der Drehzahl ($N_{mot}$) des Fahrzeuges mit einem Schwellwert der Drehzahl ($S_{nm}$) und mit einer Anordnung zum auswählen des normalerweise vom Automatgetriebe (F25) bestimmten Ganges, wenn das Fahrzeug keine Kurve durchfährt, **dadurch gekennzeichnet, dass** sie ausserdem eine Anordnung (F26) zum Herunterschalten aufweist, wenn das Fahrzeug eine Kurve durchfährt und der Fahrwiderstand grösser oder gleich als ein Schwellwert des Fahrwiderstands ist und die Drehzahl des Motors kleiner als ein Schwellwert der Motordrehzahl ist, sowie eine Anordnung zur Übernahme des normalen Ganges, wenn dieser kleiner oder gleich dem tatsächlich eingelegten Gang (F24) ist, wenn das Fahrzeug eine Kurve durchfährt und der Fahrwiderstand kleiner ist als der Schwellwert des Fahrwiderstands oder die Drehzahl des Motors grösser ist als der Schwellwert der Motordrehzahl.

**7.** Kraftfahrzeug, **dadurch gekennzeichnet, dass** es eine Vorrichtung zur automatischen Anpassung des Getriebes nach Anspruch 6 aufweist.

**Claims**

1. Method for automatic adaptation of a gearbox of a vehicle in a cornering situation, comprising steps consisting of:

   - determining, with the aid of sensors placed on the vehicle, the transversal acceleration ($\gamma_t$) of the vehicle, the engine speed ($N_{mot}$), the vehicle speed ($V_{veh}$) and a parameter ($C$, $\alpha_p$) representing the engine torque, and determining, according to the transversal acceleration, whether the vehicle is in a cornering situation; and if the vehicle is not in a cornering situation (cornering = 0), selecting the gear (N1) normally determined by the automatic gearbox,

   **characterised in that** if the vehicle is in a cornering situation (cornering = 1), when the tractive resistance ($F_{resistance}$) applied to the vehicle is less than a pre-determined threshold SFr, the gear N1 normally determined is adopted when it is lower than or equal to the actual gear engaged ($N_{BVA}$) and when the tractive resistance ($F_{resistance}$) is greater than or equal to the threshold SFr with an engine speed ($N_{mot}$) less than a pre-determined threshold ($S_{nm}$), down-shifting is imposed.

2. Method according to claim 1, **characterised in that** in order to determine whether the vehicle is in a cornering situation or not, a pre-determined transversal acceleration threshold ($S_{\gamma t}^+$) and a pre-determined threshold of the derivative of the transversal acceleration with respect to time ($Sd\gamma_t$) are used, and **in that** the vehicle is said to be cornering (cornering = 1) when the transversal acceleration is greater than said pre-determined transversal acceleration threshold, or when the derivative of the acceleration is greater than said pre-determined threshold of the transversal acceleration derivative.

3. Method according to claim 2, **characterised in that** said thresholds for detection of cornering ($Sd\gamma t$, $S_{\gamma t}^+$, $S_{\gamma t}^-$) depend upon a parameter relative to the driving style of the driver.

4. Method according to claim 1, **characterised in that** the thresholds ($S_{Fr}$) of tractive resistance and ($S_{nm}$) of engine speed depend upon the gear engaged ($N_{BVA}$).

5. Method according to claim 1 or 4, **characterised in that** said threshold ($S_{nm}$) of engine speed depends upon the driving style of the driver.

6. Device for automatic adaptation of a transmission to the curvature of the road comprising means (F11) for selecting a gear in a gearbox according to pre-determined rules for gear shifting and delivering at its output a suggested gear (N1), said selecting means (F11) being followed by a device (F12) for adapting the gear to the curvature of the road comprising means (F20) for detecting whether the vehicle is in a cornering situation, which decides upon a final gear (N) to be applied to the transmission (F13) according to the suggested gear (N1), the vehicle speed ($V_{veh}$), the engine torque (C ) and the transversal acceleration, means for comparison (F22) of tractive resistances applied to the vehicle to a threshold of tractive resistances ($S_{Fr}$), means for comparison (F23) of the vehicle engine speed ($N_{mot}$) to an engine speed threshold ($S_{nm}$), and means for selecting the gear normally determined by the automatic gearbox (F25) if the vehicle is not in a cornering situation, **characterised in that** it also comprises means that downshift (F26) if the vehicle is in a cornering situation and the tractive resistance is greater than or equal to the threshold of tractive resistances and the engine speed is less than an engine speed threshold, and means that adopt the gear normally when it is lower than or equal to the actual gear engaged (F24) if the vehicle is in a cornering situation and the tractive resistance is less than the threshold of tractive resistances or the engine speed is greater than an engine speed threshold.

7. Automotive vehicle, **characterised in that** it comprises a device for automatic adaptation of the transmission according to claim 6.

F11

$\alpha_{pap}$

[4] →

$V_{vch}$

[2] →

| Stratégie de décision du rapport BVA |

$N_1$ →

F12

| Dispositif d'adaptation à la courbure de la route |

$N$ →

| Transmission |

→ $N_{BVA}$

$\gamma_t$    $V_{vch}$    $N_{mot}$    $\alpha_{pap}$

[1]    [2]    [3]    [4]

F13

## FIG.1

$|\gamma_t|$

Virage=0     Virage=1     Virage=0

$S\gamma_t^+$

$S\gamma_t^-$

temp

T

## FIG.3

$\gamma t$

F20 ── | Reconnaissance de la situation de virage |

$\alpha_{pap}$    $N_{mot}$    $V_{reh}$    $N_{BVA}$

Virage

Virage=0           Virage=1

F21 ── | Reconnaissance de la présence d'efforts résistants |

$F_{résistant}$

Non ── $\langle$ $F_{résistant} >$ $S_{Fr}$ ? $\rangle$ ── F22

Oui

Non ── $\langle$ $N_{mot} < S_{nm}$ ? $\rangle$ ── F23

Oui

$N_1$   F25

| $N = N_1$ |

$N_1$    $N_{BVA}$

$N_{mot}$    $N_1$    $N_{BVA}$

| Si $N_1 > N_{BVA}$<br>$N = N_{BVA}$<br>Sinon $N = N_1$ |

| $N = N_{BVA} - 1$ | ── F26

F24

N           N

N

## FIG.2